# EUROPEAN PATENT APPLICATION

(11) **EP 4 632 648 A1**
(43) Date of publication of application: **15.10.2025**
(21) Application number: 25166953.7
(22) Date of filing: 28.03.2025
(51) Int. Cl.: G06Q 10/107, G06F 16/34, G06F 40/35, G06N 20/00, H04L 51/216

(54) **METHOD, APPARATUS, AND COMPUTER PROGRAM FOR EMAIL SUMMARIZATION**

(30) Priority: 08.04.2024 KR 20240047649; 30.05.2024 KR 20240071031
(71) Applicant: Samsung SDS Co., Ltd., Seoul 05510 (KR)
(72) Inventor: Yeo, Harold, 05510 Seoul (KR); Kwak, Hyun Min Dylan, 05510 Seoul (KR); Jeon, Harry, 05510 Seoul (KR)
(74) Representative: Grünecker Patent- und Rechtsanwälte PartG mbB

(57) **Abstract**

A processor-implemented method including generating a summarization prompt for email summarization with email content according to an email summarization request, forming email threads by dividing threads of the email content, and summarizing the email content using artificial intelligence, based on the email threads grouped in units of threads and the summarization prompt.

## Description

### CROSS-REFERENCE TO RELATED APPLICATION(S)

This application claims priority to Korean Patent Application No. 10-2024-0047649, filed on April 08, 2024 and Korean Patent Application No. 10-2024-0071031, filed on May 30, 2024 in the Korean Intellectual Property Office, the entire disclosures of which are incorporated herein by reference for all purposes.

### BACKGROUND OF THE INVENTION

### 1. Field

The present disclosure relates to a method, an apparatus, and a computer program for summarizing email and, more specifically, to a method, an apparatus, and a computer program for summarizing email, which quickly identify the content of emails utilizing generative artificial intelligence and prompt engineering to accurately capture only the information necessary for email users, and effectively provide work the users have to do, inquiries that need responses, information about meetings that need to be attended, and the like, thereby enabling quick and efficient processing of work.

### 2. Description of the Related Art

The use of IT technology in conducting business plays a critical role in increasing work productivity. In particular, many companies share work and deliver instructions through email, and create additional pages to record this work.

In the process of conducting work through email, if there are many people involved in the work or if the work lasts a long time, it is inevitable that history is accumulated in the body of an email. As a result, if the user is away from the desk for a long time or if an emergency case occurs, the user is unable to check all the accumulated emails, thereby often missing important information because, which causes disruption to the work.

Meanwhile, there were the following problems in the past.

Problem 1. It is difficult to check the content of emails with multiple email threads in a short period of time, and if the user misses important information, it often causes disruption to the work.

Due to the nature of portal work emails, there are almost no cases where work is completed with a single email.

Multiple emails are exchanged, and the email threads that occur during this process accumulate, so the content that users have to read gradually increases and becomes more complicated. In this process, if users are newly added as recipients in the middle of the process, it takes time and cost for them to understand the initial content of the email, and this also has limitations in accurately understanding the same.

Problem 2. If the size of the email body exceeds an allowable token size of a large language model (LLM) during email summarization, the initial summary and the final summary are summarized without any correlation, unless the email is cut based on threads

When summarizing email, there is a maximum allowable token size depending on the type of generative artificial intelligence (Gen.AI), and if the email body is divided according to this token, the email body is divided in the middle, and LLM may arbitrarily interpret or discard the cut body at each call, so there may be missing parts in the middle, or hallucination may occur in which information that does not actually exist or incorrect information is created, so that the email may be summarized and delivered differently from what the user intended.

Problem 3. If duplicate parts of the body and an empty email are sent to the generative artificial intelligence, unnecessary relationships may be derived.

In the case of a duplicated email body or an empty email, the generative artificial intelligence may generate meaningless hallucinations or perform incorrect summarization. Since the generative artificial intelligence cannot identify the chronological relationship, such errors are more likely to be detected.

Problem 4. When the generative artificial intelligence is called sequentially, the response time is exceeded.

When calling the generative artificial intelligence, if the large body is divided and calling is performed sequentially, timeouts occur frequently and the time waiting for a response from the server becomes longer.

### SUMMARY

In a general aspect, here is provided a processor-implemented method including generating a summarization prompt for email summarization with email content according to an email summarization request, forming email threads by dividing threads of the email content, and summarizing the email content using artificial intelligence, based on the email threads grouped in units of threads and the summarization prompt.

The summarizing of email may include, when a predetermined number of email threads grouped in units of threads are grouped in email thread chunks, providing respective email thread chunks and the summarization prompt for email summarization, to respective artificial intelligences.

The method may include, after providing the respective email thread chunks and the summarization prompt to the respective artificial intelligences, providing an individual summary received from each artificial intelligence and a re-summarization prompt for re-summarization, to the artificial intelligence.

The generating of the summarization prompt may include generating an options prompt according to a summary option selection together with the email content.

The generating of the summary prompt may also include including the options prompt in the summarization prompt, and each options prompt for each summary option may be pre-stored in a template storage to standardize a response template for each summary option and to extract a value to be substituted for the template from the email content.

The forming of the email threads may include removing threads containing duplicate content, threads containing empty content, and threads containing unnecessary content.

The forming of the email threads may include dividing the threads of the email content, based on a delimiter used when replying and forwarding for each email provider.

In a general aspect, here is provided a computing apparatus including a processor configured to execute instructions, a memory storing the instructions, and an execution of the instructions configures the processor to generate a summarization prompt for email summarization with email content according to an email summarization request, form email threads by dividing threads of the email content, and summarize the email content using artificial intelligence, based on the email threads grouped in units of threads and the summarization prompt.

The summarizing of email may include, when a predetermined number of email threads grouped in units of threads are grouped in email thread chunks, providing respective email thread chunks and the summarization prompt, to respective artificial intelligences.

The processor may be further configured to, after providing the respective email thread chunks and the summarization prompt to the respective artificial intelligences, provide an individual summary received from each artificial intelligence and a re-summarization prompt for re-summarization, to the artificial intelligence.

The generating of the summarization prompt may include generating an options prompt according to a summary option selection together with the email content.

The generating of the summarization prompt may also include including the options prompt in the prompt for email summarization, and each options prompt for each summary option may be pre-stored in a template storage to standardize a response template for each summary option and to extract a value to be substituted for the template from the email content.

The forming of the email threads may include removing threads containing duplicate content, threads containing empty content, and threads containing unnecessary content.

The forming of the email threads may include dividing the threads of the email content based on a delimiter used when replying and forwarding for each email provider.

In a general aspect, here is provided a non-transitory computer-readable storage medium storing instructions that, when executed by a processor, cause the processor to perform a method including generating a summarization prompt for email summarization with email content according to an email summarization request, forming email threads by dividing threads of the email content, and summarizing the email content using artificial intelligence, based on the email threads grouped in units of threads and the summarization prompt.

The summarizing of email may include, when a predetermined number of email threads grouped in units of threads are grouped in email thread chunks, providing respective email thread chunks and the summarization prompt for email summarization, to respective artificial intelligences.

The method may include, after providing the respective email thread chunks and the summarization prompt to the respective artificial intelligences, providing an individual summary received from each artificial intelligence and a re-summarization prompt for re-summarization, to the artificial intelligence.

The generating of the summarization prompt may include generating an options prompt according to a summary option selection together with the email content.

The generating of the summarization prompt may also include including the options prompt in the prompt for email summarization, and each options prompt for each summary option may be pre-stored in a template storage to standardize a response template for each summary option and to extract a value to be substituted for the template from the email content.

The forming of the email threads may include removing threads containing duplicate content, threads containing empty content, and threads containing unnecessary content.

### BRIEF DESCRIPTION OF THE DRAWINGS

FIG. 1 is a drawing illustrating the entire process of a method for summarizing email according to an embodiment of the present disclosure.
FIG. 2 is a drawing illustrating a detailed process of a prompt layer.
FIG. 3 is a drawing illustrating an option selection screen where a user selects an option to summarize.
FIG. 4 is a drawing illustrating a detailed process of a thread layer.
FIG. 5 is a drawing illustrating a delimiter for each email provider when replying/forwarding.
FIG. 6 is a drawing illustrating a detailed process of a tokenizer layer.
FIG. 7 is a drawing illustrating a detailed process of a generative artificial intelligence call layer.
FIG. 8 is a flowchart illustrating a scenario for each case in which there is no thread delimiter and an email summarization call falls within a call token.
FIG. 9 is a flowchart illustrating a scenario for each case in which there is a thread delimiter and an email summarization call falls within a call token.
FIG. 10 is a flowchart illustrating a scenario for each case in which there is a thread delimiter and an email summarization call exceeds a call token.
FIG. 11 is a diagram illustrating an example of email summarization in the case where a user selects a "basic summarization" option.
FIG. 12 is a diagram illustrating an example of email summarization in the case where a user selects a "time-ordered" option.
FIG. 13 is a diagram illustrating an example of email summarization in the case where a user selects a "to-do-oriented" option.
FIG. 14 is a diagram illustrating an example of email summarization in the case where a user selects a "meeting information-oriented" option.
FIG. 15 is a drawing illustrating an example of email summarization in the case where a user selects a "list-type" option.
FIG. 16 is a drawing illustrating an example of email summarization in the case where a user selects a "response required" option.
FIG. 17 is a drawing illustrating an example of a conventional email summarization prompt.
FIGS. 18A, 18B, and 18C are drawings illustrating a few-shot template prompt used in an embodiment of the present disclosure, and reference numeral 1900 in FIG. 18B indicates a sample code for a few-shot prompt related to a user message and an assistant message.
FIGS. 19A and 19B are drawings illustrating a MapReduce combine prompt, and the prompt illustrated in FIGS. 19A and 19B is a prompt that combines content summarized multiple times at the MapReduce time.
FIG. 20 is a diagram illustrating the configuration of a computing apparatus according to an embodiment of the present disclosure.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

As used in connection with various example embodiments of the disclosure, any use of the terms "module" or "unit" means hardware and/or processing hardware configured to implement software and/or firmware to configure such processing hardware to perform corresponding operations, and may interchangeably be used with other terms, for example, "logic," "logic block," "part," or "circuitry". As one non-limiting example, an application-predetermined integrated circuit (ASIC) may be referred to as an application-predetermined integrated module. As another non-limiting example, a field-programmable gate array (FPGA) or an application-specific integrated circuit (ASIC) may be respectively referred to as a field-programmable gate unit or an application-specific integrated unit. **In** a non-limiting example, such software may include components such as software components, object-oriented software components, class components, and may include processor task components, processes, functions, attributes, procedures, subroutines, segments of the software. Software may further include program code, drivers, firmware, microcode, circuits, data, database, data structures, tables, arrays, and variables. **In** another non-limiting example, such software may be executed by one or more central processing units (CPUs) of an electronic device or secure multimedia card.

Although terms such as "first," "second," and "third", or A, **B,** (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

The present disclosure has been made to solve the problems of the conventional technology described above, and is to provide a method, an apparatus, and a computer program for summarizing emails, which quickly identify the content of emails utilizing generative artificial intelligence and prompt engineering to accurately capture only the information necessary for email users, and effectively provide work the users have to do, inquiries that need responses, information about meetings that need to be attended, and the like, thereby enabling quick and efficient processing of work.

In addition, the present disclosure is to provide a method, an apparatus, and a computer program for summarizing emails capable of accurately summarizing emails with the email options that the user wishes.

First, before describing the exemplary embodiments, the core of the present disclosure will be described. The present disclosure may quickly identify the content of emails utilizing generative artificial intelligence and prompt engineering to accurately capture only the information necessary for email users, and may effectively provide work the users have to do, inquiries that need responses, information about meetings that need to be attended, and the like, thereby enabling quick and efficient processing of work.

The process of a method for summarizing email according to an embodiment of the present disclosure may be summarized as follows. First, if a user selects email information that the user wishes to summarize and an item of interest that the user needs, a prompt for email summarization optimized for the item of interest may be written together with the email content. Thereafter, the size of an email body and accumulated email threads may be determined to divide the email threads. The present disclosure may support multiple generative artificial intelligence types, and the user may select the type, so that the summary function may be performed through the generative artificial intelligence type, and at this time, a parallel call method may be applied internally for fast response performance. In addition, based on the first summary result, a prompt for the final summary may be provided to the generative artificial intelligence, so that the summary function may be performed through the generative artificial intelligence, and the summary result that the user actually needs may be provided.

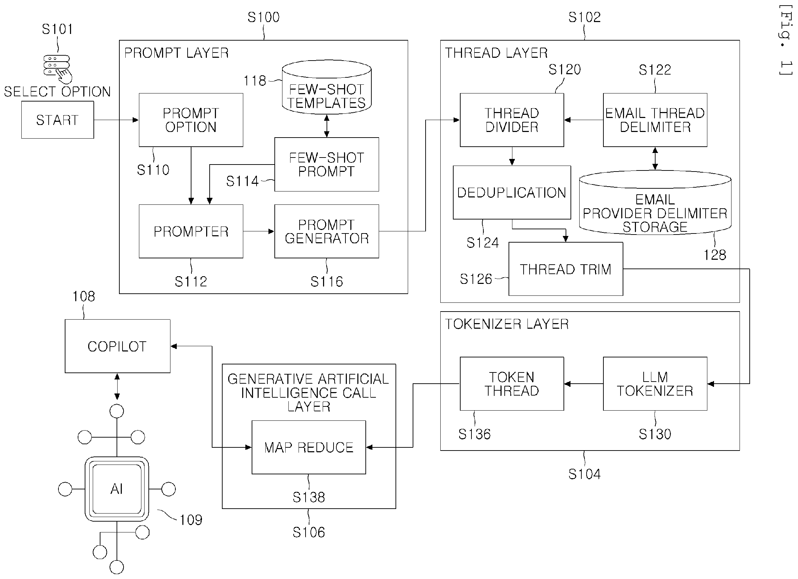

First, FIG. 1 is a drawing illustrating the entire process of a method for summarizing email according to an embodiment of the present disclosure.

As shown in FIG. 1, the method for summarizing email according to an embodiment of the present disclosure may include a prompt layer S100, a thread layer S102, a tokenizer layer S104, and a generative artificial intelligence call layer S106. Reference number 108 may represent a copilot that plays the role of an orchestrator, and reference number 109 may represent generative artificial intelligence.

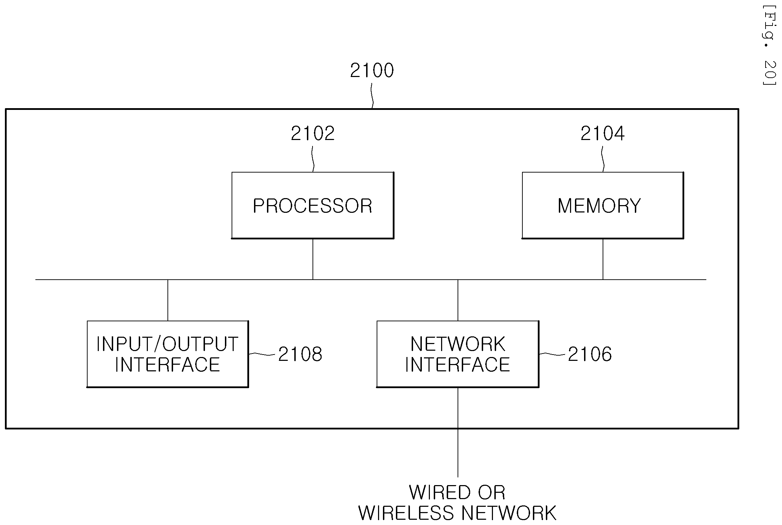

Meanwhile, a computing apparatus 2100 illustrated in FIG. 20 and capable of performing the method of summarizing email according to an embodiment of the present disclosure illustrated in FIG. 1 may be implemented using one or more physical computing apparatus, but the present disclosure is not necessarily limited thereto, and the computing apparatus 2100 may also be implemented in various forms such as being configured as personal computer processing devices such as desktop computers, laptops, tablets, and smartphones, being configured based on a cloud system, or being configured as a dedicated device.

**In** addition, a network connecting the computing apparatus 2100 illustrated in FIG. 20, which may perform a method of summarizing email according to an embodiment of the present disclosure, and the generative artificial intelligence may use a wired network or a wireless network, and specifically, may include various communication networks such as a local area network (LAN), a metropolitan area network (MAN), and a wide area network (WAN). **In** addition, the network may include the World Wide Web (WWW: World Wide Web) well known. **In** addition, the network may be implemented using a data bus configured to transmit and receive data or the like.

Here, the method of summarizing email according to an embodiment of the present disclosure may be performed by a computing apparatus, and may be implemented including a computing apparatus 2100 described later in relation to FIG. 20. For example, the computing apparatus 2100 summarizing email according to an embodiment of the present disclosure may include a processor 2102, and the processor 2102 may perform: an operation of generating a prompt for email summarization along with email content according to an email summarization request from a user; an operation of forming email threads by dividing threads of the email content; and an operation of summarizing email, based on the email threads grouped in units of threads and the prompt for email summarization, using artificial intelligence.

Summarizing email using the artificial intelligence, based on the email threads and the prompt, in the present disclosure may include not only the case where the email thread is included and input to the artificial intelligence, but also the case where the email thread is input to the artificial intelligence separately from the prompt and processed.

Hereinafter, the configuration and operation of a method and apparatus for improving email summarization quality using generative artificial intelligence according to an embodiment of the present disclosure will be examined in more detail with reference to the respective drawings.

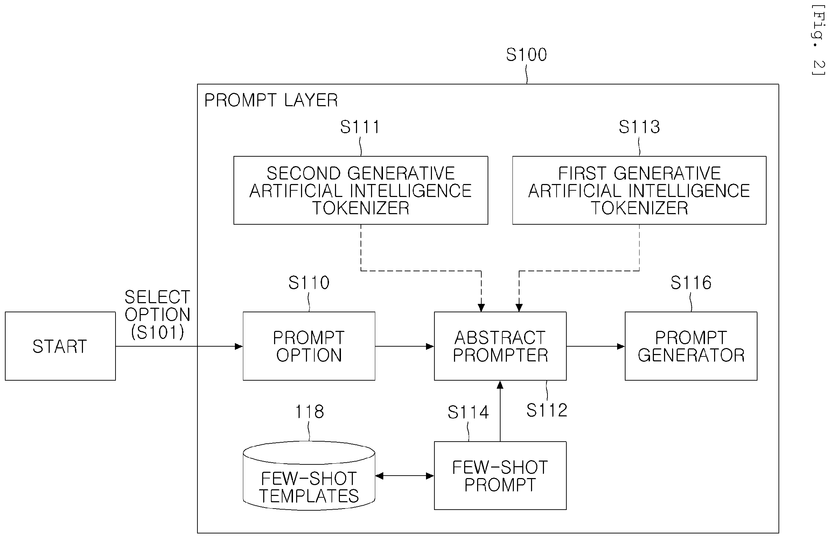

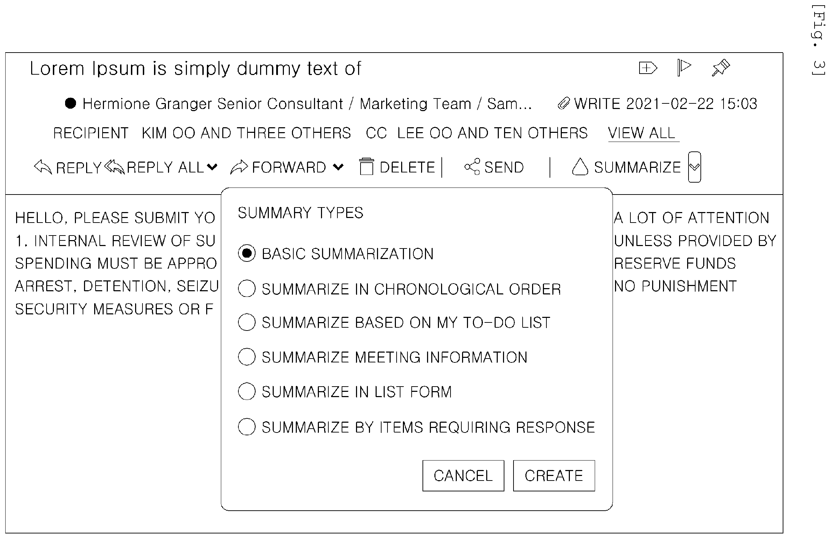

Referring to FIGS. 2 and 3, the user may select an option to summarize in step S101.

As shown in FIG. 3, the options that the user is able to select may include "Basic summarization," "Summarize in chronological order," "Summarize based on my to-do list," "Summarize meeting information," "Summarize in list form," and "Summarize by items requiring response," but the present disclosure is not limited thereto and may include more selection options.

Step S100 is a prompt layer, and in step S100, a prompt for email summarization may be generated along with email content according to the email summarization method selected by the user.

The present disclosure enables generative artificial intelligence to clearly extract and deliver information necessary when an email user uses an email information summary function. By standardizing a response template for each option that the user may select and extracting the value substituted for the template from the email body, an assistant message for a few-shot prompt to a user message and a system message of the prompt that is suitable for an **LLM** for each of various generative artificial intelligence types may be generated in the prompt layer S100.

Step S110 is a prompt option step in which a summary option selected by the user may be received, and step S114 is a few-shot prompt step in which a few-shot prompt may be created according to the summary option selected by the user, based on a few-shot template stored in a few-shot template storage 118.

Step S111 is a second generative artificial intelligence prompter step, and step S113 is a first generative artificial intelligence prompter step. In steps S111 and S113, a system message may be created according to a generative artificial intelligence or LLM-specific prompt sample.

Step S112 is an abstract prompter step in which a generative artificial intelligence or LLM-specific assistant message may be created to include the few-shot prompt.

Step S116 is a prompt generator step in which a system message, assistant message, and user message to be transmitted to the generative artificial intelligence or LLM may be finally created.

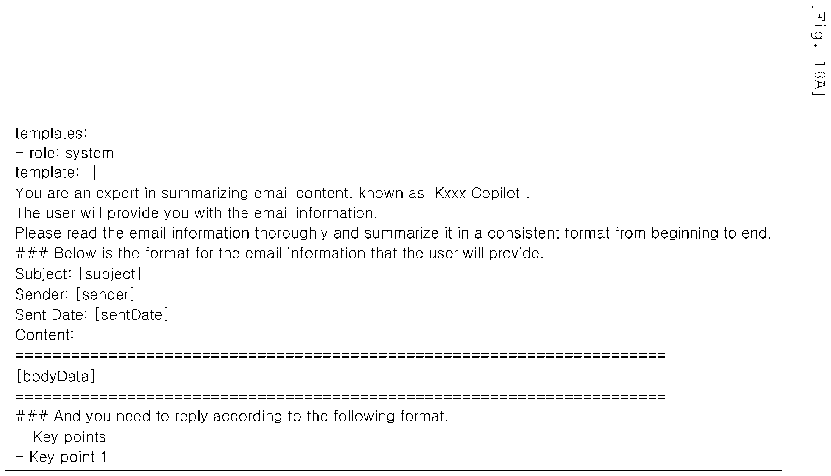

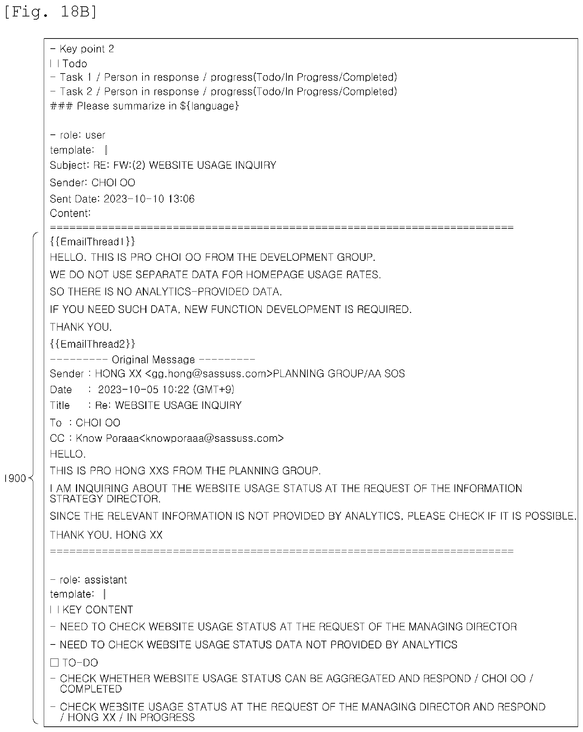

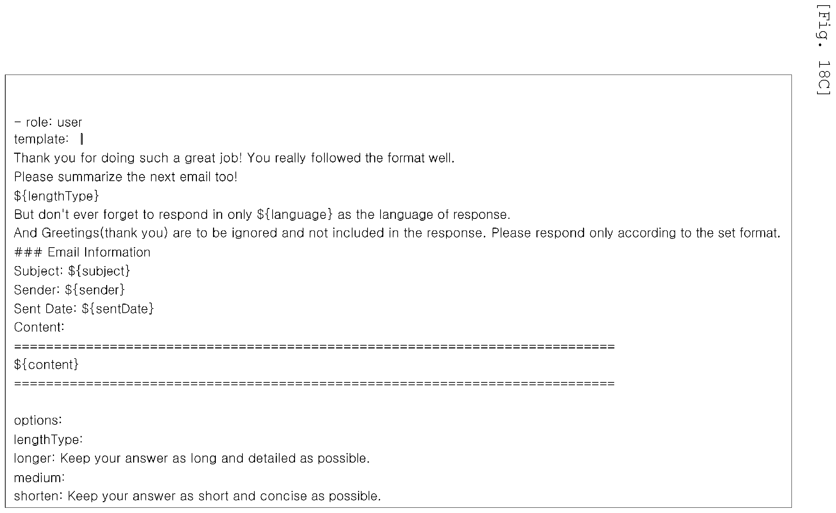

In a method for improving email summarization quality using generative artificial intelligence according to an embodiment of the present disclosure, the exemplary prompt templates illustrated in FIGS. 18A to 18C may be used. FIG. 18B illustrates a few-shot prompt code 1900 according to a summary option selected by the user. FIGS. 18A to 18C illustrate prompt templates for one style option. Since the prompt itself is configured as text, the entire prompt template used in the present disclosure may include a prompt for each style option.

The method of summarizing email according to an embodiment of the present disclosure may generate a prompt for email summarization optimized for the items of interest required by the user according to the summary option selected by the user for various body cases, and may improve the summary accuracy for various body cases through the few-shot prompting.

The email system user may distinguish the summary forms only by selecting the summary option required by the user from the email content without separate prompt knowledge.

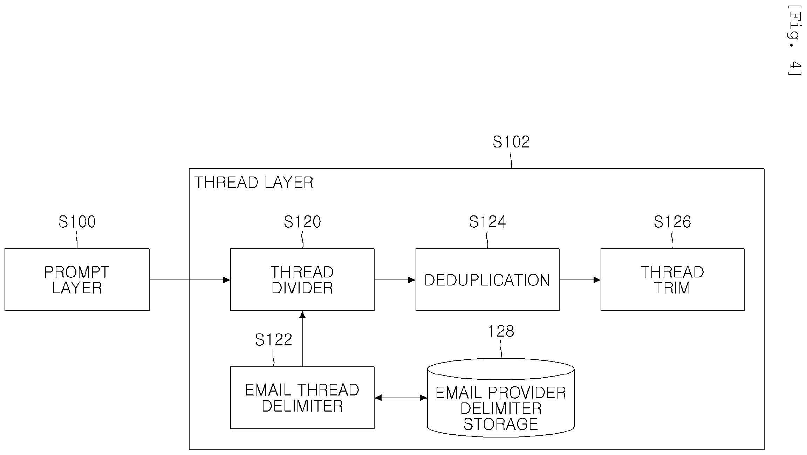

Referring to FIG. 4, step S102 is a thread layer in which the threads of email content may be divided to form email threads. The respective areas added through reply/retransmission in the email may be divided in units of threads so that one complete body may be delivered when calling the generative artificial intelligence. In addition, duplicate and unnecessary content may be removed from the divided threads, thereby improving the response speed and quality.

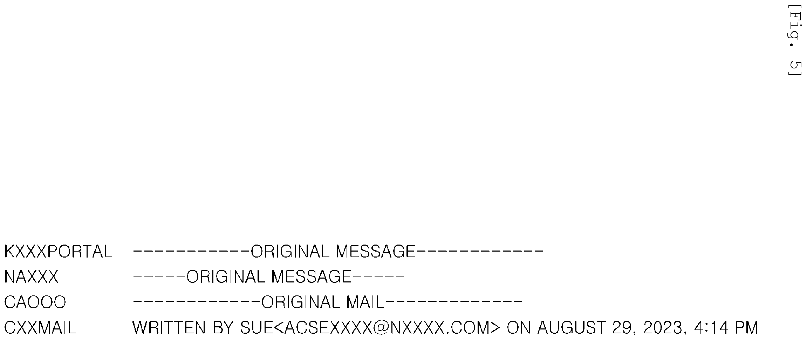

In the case of email service, as shown in FIG. 5, there is a delimiter added for each email provider when replying/forwarding, and this delimiter may be stored separately in an email provider delimiter storage 128 and continuously updated.

Step S122 is an email thread delimiter step in which thread delimiters may be matched to the respective delimiters.

Step S120 is a thread divider step in which the threads of the email body may be divided and made into an array, based on the email thread delimiter for each email provider.

Step S124 is a deduplication step in which duplicate thread items may be removed. In this step, threads with duplicate content may be removed.

Step S126 is a thread trim step in which a thread with empty or unnecessary content may be removed.

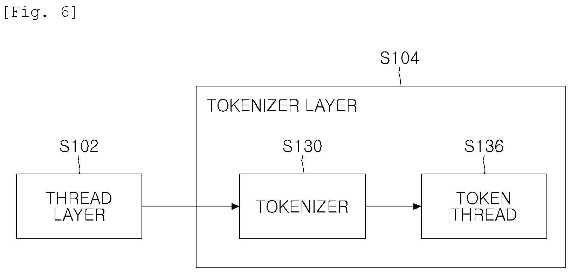

Referring to FIG. 6, step S104 is a tokenizer layer in which email threads may be grouped in units of threads through a tokenizer S130 and a token thread S136.

When a predetermined number of email threads grouped in units of threads are called (i.e., grouped) an email thread chunk, a plurality of email thread chunks may be provided to the generative artificial intelligences, respective, along with the prompt for email summarization, and individual summaries received from the respective generative artificial intelligences may be provided to the generative artificial intelligence along with a prompt for re-summarization in order to obtain the final summary result.

In step S106, when it approaches the maximum token, it approaches the socket timeout, so these calls may be applied as parallel calls, and when the final summary is performed, MapReduce and stream calls may be applied to minimize the user's waiting time.

Step S139 is a thread list step in which a thread list separated by the tokenizer layer S104 may be received.

Steps S140_1 to S140_4 are parallel call steps in which the generative artificial intelligences 142_1 to 142_4 may be called in parallel from the plurality of email thread chunks (mail thread chunk 1 to email thread chunk 4) in the thread list.

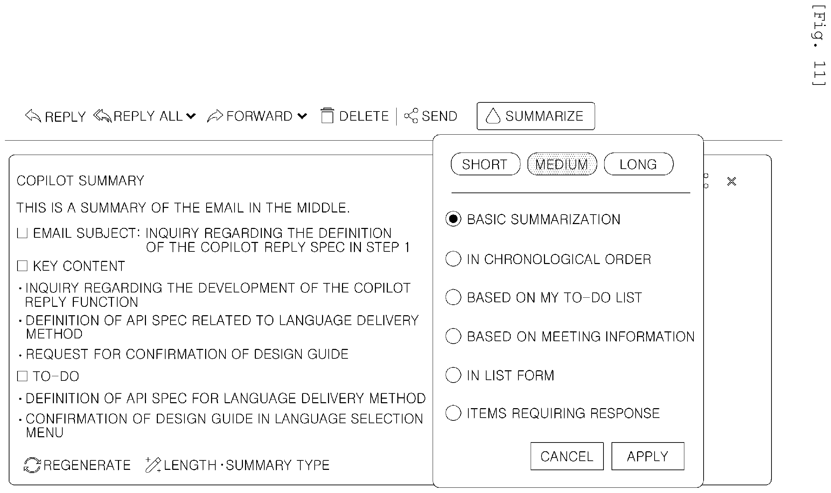

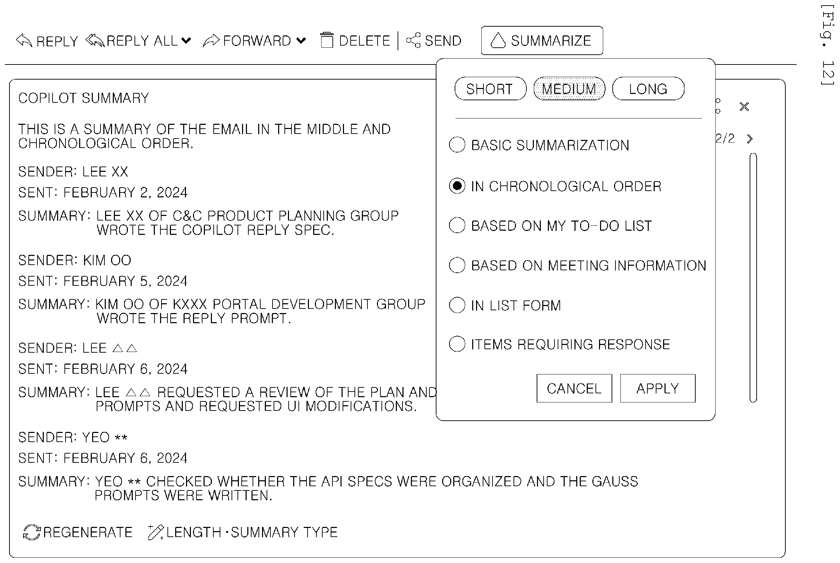

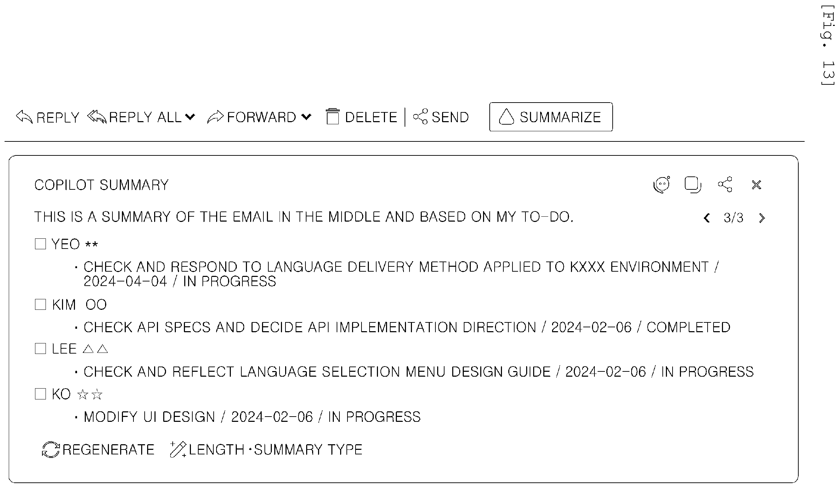

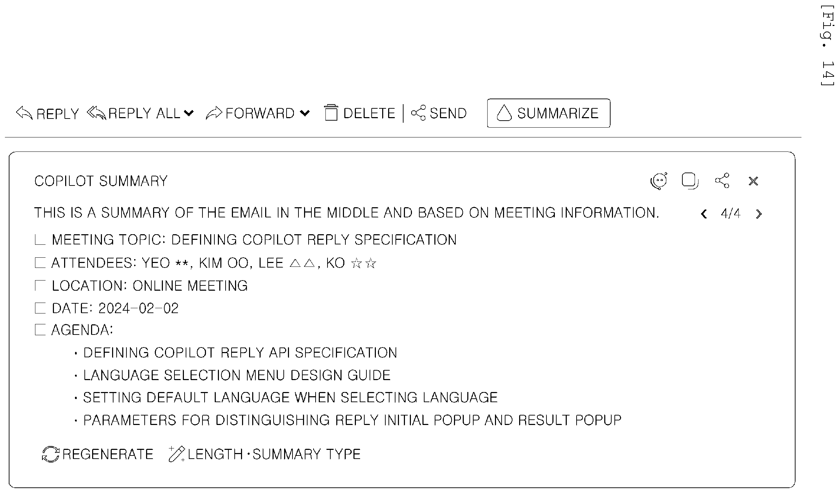

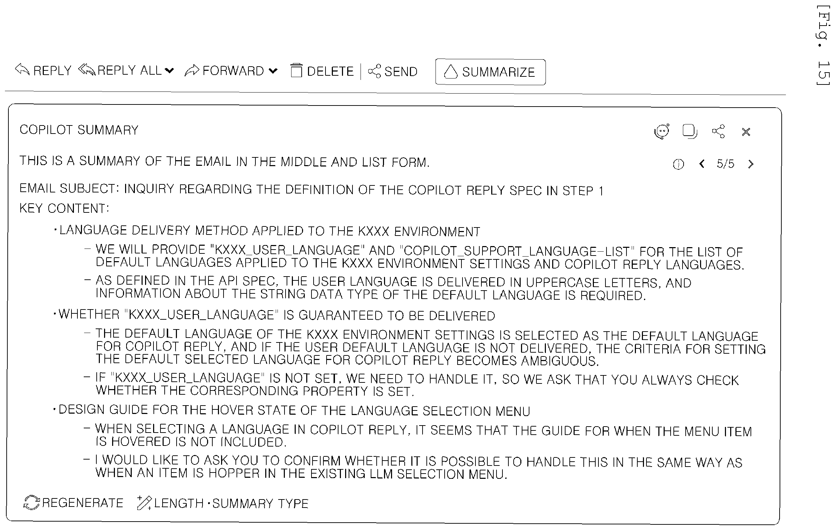

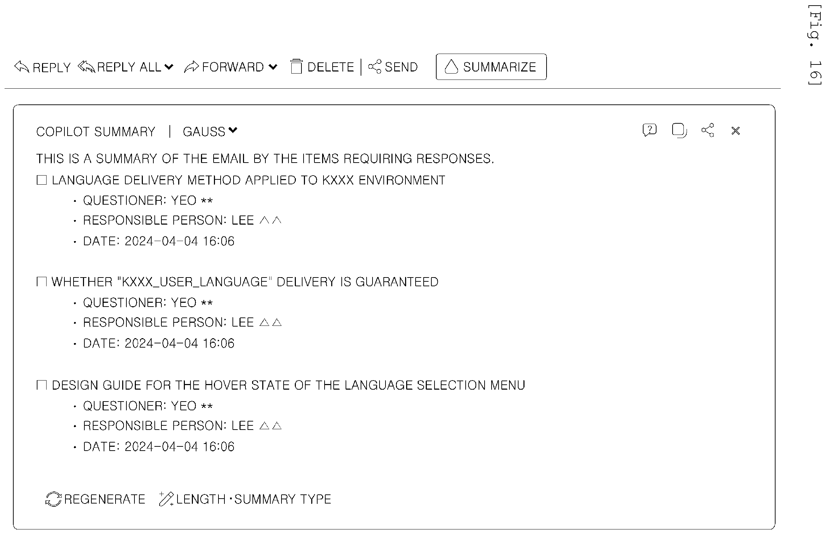

Step S144 is a re-summarization step in which a prompt for re-summarization may be added and provided to the generative artificial intelligence 146, and the re-summarization result received through the generative artificial intelligence 146 may be transmitted to the user as a stream in the form of a flux, thereby minimizing the response waiting time. Exemplary re-summarization results are illustrated in FIGS. 11 to 16.

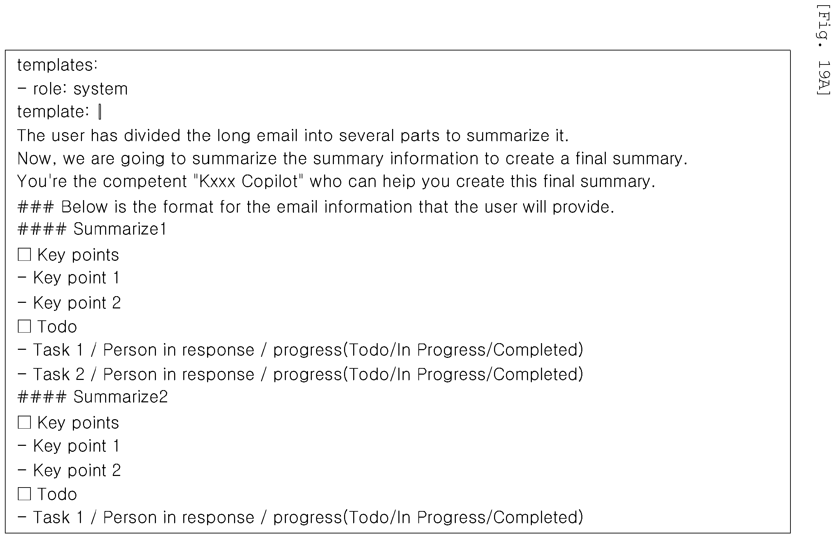

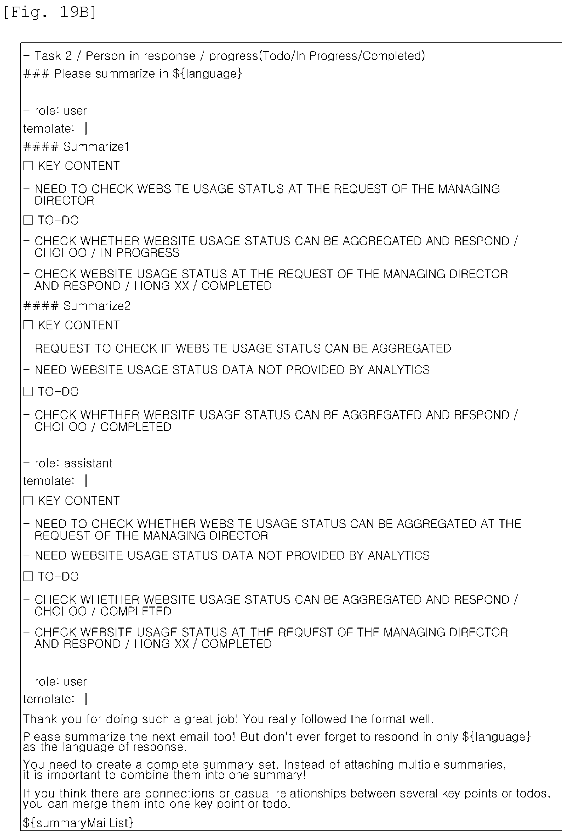

The prompt for re-summarization may include the MapReduce Combine prompts illustrated in FIGS. 19A and 19B.

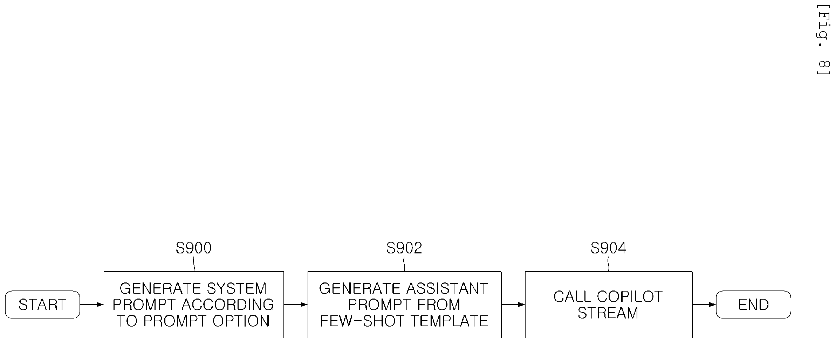

Meanwhile, FIG. 8 is a flowchart illustrating a scenario for each case in which there is no thread delimiter and an email summarization call falls within a call token.

**In** the case where there is no thread delimiter and where an email falls within the token size, the stream may be called when calling the email summarization by including the user prompt body content and adding a few-shot template to the assistant prompt without division of the threads, so that all the content may be simply put into a single prompt.

Referring to FIG. 8, a system prompt may be generated according to the prompt option in step S900, and an assistant prompt may be generated from the few-shot template in step S902, and a copilot stream may be called in step S904.

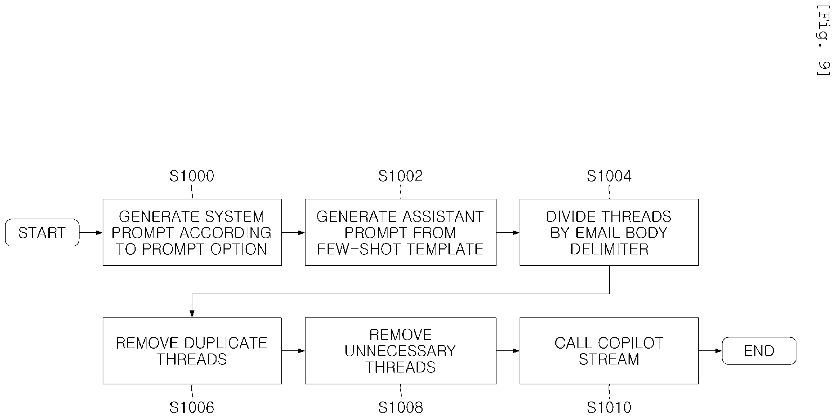

FIG. 9 is a flowchart illustrating a scenario for each case in which there is a thread delimiter and an email summarization call falls within a call token.

If there is a thread delimiter, the email body may be divided for each thread in the email thread layer, and the stream may be called after removing unnecessary emails through preprocessing.

Referring to FIG. 9, a system prompt may be generated according to the prompt option in step S1000, an assistant prompt may be generated from the few-shot template in step S1002, the threads may be divided by an email body delimiter in step S1004, duplicate threads may be removed in step S1006, unnecessary threads may be removed in step S1008, and a copilot stream may be called in step S1010.

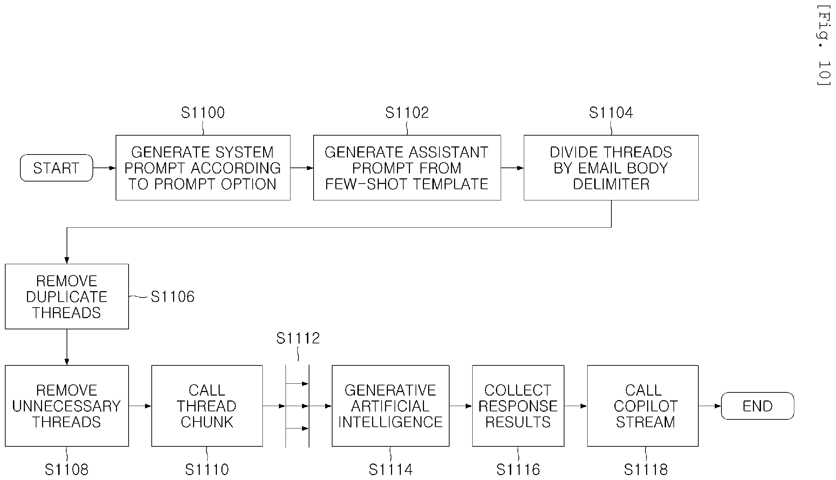

FIG. 10 is a flowchart illustrating a scenario for each case in which there is a thread delimiter and an email summarization call exceeds a call token.

If there is a thread delimiter, the email body may be divided for each thread in the email thread layer, and after removing unnecessary emails through preprocessing, MapReduce may be called.

MapReduce may be a method of summarizing respective documents individually in the map stage and then combining the summaries into a final summary in the reduce stage.

Referring to FIG. 10, a system prompt may be generated according to the prompt option in step S1100, an assistant prompt may be generated from the few-shot template in step S1102, threads may be divided by an email body delimiter in step S1104, duplicate threads may be removed in step S1106, unnecessary threads may be removed in step S1108, and a thread chunk may be called in step S1110.

S1112 indicates calling a plurality of generative artificial intelligences 1114 in parallel.

The response results from the respective generative artificial intelligences 1114 may be collected in step S1116, and the copilot stream may be called in step S1118.

In addition, a computer program according to another aspect of the present disclosure may be a computer program stored in a computer-readable medium for executing a series of steps of the method for summarizing email according to an embodiment of the present disclosure discussed above on a computing apparatus. The computer program may be not only a computer program including machine language codes created by a compiler, but also a computer program including high-level language codes executable in a computer using an interpreter or the like. In this case, the computer includes, in addition to a personal computer (PC) or a laptop computer, any type of information processing device equipped with a central processing unit (CPU) to execute a computer program, such as a server, a smartphone, a tablet PC, a PDA, or a mobile phone.

In addition, the computer-readable medium may be a medium that continuously stores a computer-executable program, or temporarily stores it for execution or download. In addition, the medium may be a variety of recording means or storage means in the form of a single piece of hardware or a combination of multiple pieces of hardware, and may not be limited to a medium directly connected to a computer system, but may also be distributed on a network. Therefore, the above detailed description should not be construed as limiting the present disclosure in all respects and should be considered as examples. The scope of the present disclosure should be determined by a reasonable interpretation of the appended claims, and all changes within the equivalent scope of the present disclosure are included in the scope of the present disclosure.

In addition, an apparatus 2100 capable of performing the method for summarizing email according to an embodiment of the present disclosure may be an apparatus capable of summarizing email and including a processor and a memory, wherein the memory may include instructions configured to, when executed by the processor, cause the apparatus to implement specific operations, and the specific operations may include: generating a prompt for email summarization together with email content according to an email summarization request from a user; forming email threads by dividing threads of the email content; and summarizing email using artificial intelligence, based on the email threads grouped in units of threads and the prompt for email summarization.

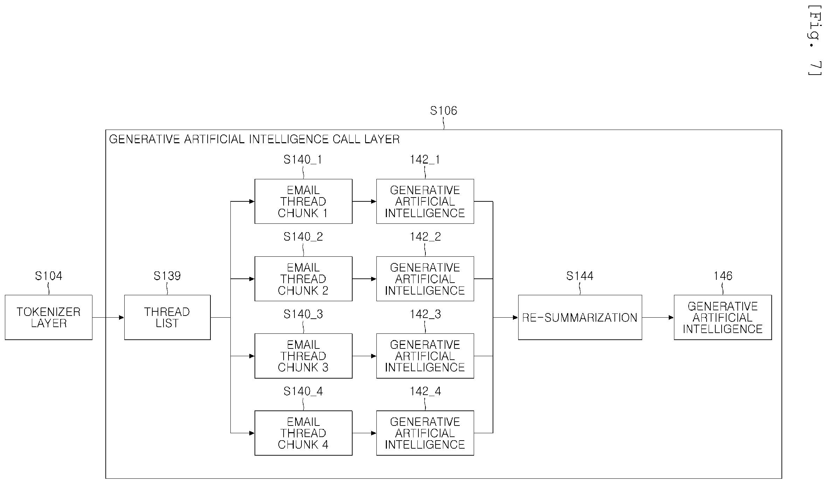

Here, an apparatus 2100 for summarizing email according to an embodiment of the present disclosure may be easily implemented based on the method for summarizing email described with reference to FIGS. 1 to 10 above, and thus, redundant explanations will be omitted below and the primary components of the present disclosure will be described.

**In** the present disclosure, summarizing email using artificial intelligence, based on email threads and prompts, may include not only the case where email threads are included and input to artificial intelligence, but also the case where email threads are input to artificial intelligence and processed separately from prompts.

**In** addition, the providing the email threads grouped in units of threads and the prompt for email summarization to artificial intelligence may include, when a predetermined number of email threads grouped in units of threads are called email thread chunks, providing respective email thread chunks, along with the prompt for email summarization, to respective artificial intelligences.

In addition, the specific operations may further include, after providing the respective email thread chunks, along with the prompt for email summarization, to the respective artificial intelligences, providing an individual summary received from each artificial intelligence, along with a prompt for re-summarization, to the artificial intelligence.

In addition, in the generating of the prompt for email summarization together with the email content according to the email summarization request from the user, a prompt according to a summary option selected by the user may be generated together with the email content.

In addition, in the generating of the prompt for email summarization together with the email content according to the email summarization request from the user, a prompt corresponding to a summary option selected by the user may be included in the prompt for email summarization, and the prompt for each summary option may be pre-stored in a template storage in order to standardize a response template for each summary option and extract a value to be substituted for the template from the email content.

In addition, in the forming of the email threads by dividing the threads of the email content, threads containing duplicate content, threads containing empty content, and threads containing unnecessary content may be removed.

In addition, in the forming of the email threads by dividing the threads of the email content, the threads of the email content may be divided based on a delimiter used when replying and forwarding for each email provider.

Referring to FIG. 20, the computing apparatus 2100 to which the proposed method of the present disclosure may be applied may be configured to implement a process of summarizing email according to the proposed method of the present disclosure.

For example, an apparatus 2100 to which the proposed method of the present disclosure may be applied may include network devices such as repeaters, hubs, bridges, switches, routers, gateways, and the like, computer devices such as desktop computers, workstations, and the like, mobile terminals such as smartphones and the like, and portable devices such as laptop computers and the like. As another example, the apparatus 2100 to which the present disclosure may be applied may be included as part of an ASIC (Application Specific Integrated Circuit) implemented in the form of an SoC (System-on-Chip).

The memory 2104 may be connected to the processor 2102 during operation, and may store programs and/or instructions for processing and controlling the processor 2102, and may store data and information used in the present disclosure, control information required for processing data and information according to the present disclosure, and temporary data generated during the data and information processing process. The memory 2104 may be implemented as a storage device such as a ROM (Read-Only Memory), a RAM (Random Access Memory), an EPROM (Erasable Programmable Read-Only Memory), an EEPROM (Electrically Erasable Programmable Read-Only Memory), a flash memory, a SRAM (Static RAM), an HDD (Hard Disk Drive), an SSD (Solid State Drive), and the like.

The processor 2102 may be operatively connected to the memory 2104 and/or the network interface 2106, and may control the operation of respective modules in the apparatus 2100. In particular, the processor 2102 may perform various control functions for performing the proposed method of the present disclosure. The processor 2102 may also be called a controller, a micro-controller, a micro-processor, a micro-computer, or the like. The proposed method of the present disclosure may be implemented by hardware, firmware, software, or a combination thereof. When implementing the present disclosure using hardware, an ASIC (application specific integrated circuit) or a DSP (digital signal processor), a DSPD (digital signal processing device), a PLD (programmable logic device), an FPGA (field programmable gate array), or the like, configured to perform the present disclosure, may be provided in the processor 2102. Meanwhile, when implementing the proposed method of the present disclosure using firmware or software, the firmware or software may include instructions related to modules, procedures, or functions that perform functions or operations necessary for implementing the proposed method of the present disclosure, and the instructions may be stored in the memory 2104 or stored in a computer-readable recording medium (not shown) separate from the memory 2104, and may be configured to cause, when executed by the processor 2102, the apparatus 2100 to perform the proposed method of the present disclosure.

In addition, the apparatus 2100 may include a network interface device 2106. The network interface device 2106 may be connected to the processor 2102 during operation, and the processor 2102 may control the network interface device 2106 to transmit or receive wireless/wired signals carrying information, data, signals, and/or messages through a wireless/wired network. The network interface device 2106 may support various communication standards such as IEEE 802 series, 3GPP LTE(-A), 3GPP 5G, etc., and may transmit and receive control information and/or data signals according to the corresponding communication standards. The network interface device 2106 may be implemented outside the apparatus 2100 as needed.

In addition, the computing apparatus 2100 may include an input/output interface device 2108 capable of inputting and outputting data.

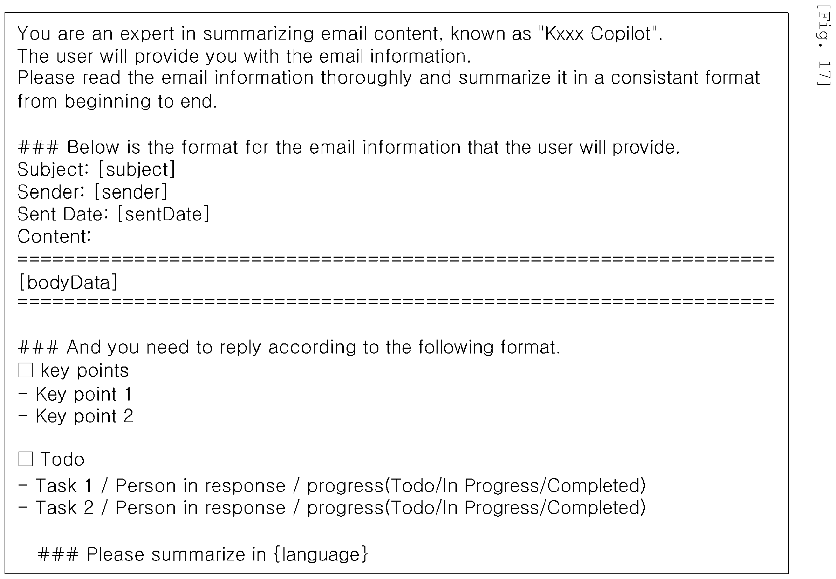

The electronic apparatuses, computing apparatuses, processors, memories, computing apparatus 2100, memory 2104, processor 2102, I/O interface 2108, and Network interface 2106 described herein and disclosed herein described with respect to FIGS. 1-20 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-20 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

## Claims

1. A processor-implemented method, the method comprising:
generating a summarization prompt for email summarization with email content according to an email summarization request;
forming email threads by dividing threads of the email content; and
summarizing the email content using artificial intelligence, based on the email threads grouped in units of threads and the summarization prompt.

2. The method of claim 1, wherein the summarizing of email comprises:
when a predetermined number of email threads grouped in units of threads are grouped in email thread chunks, providing respective email thread chunks and the summarization prompt for email summarization, to respective artificial intelligences.

3. The method of claim 2, further comprising:
after providing the respective email thread chunks and the summarization prompt to the respective artificial intelligences, providing an individual summary received from each artificial intelligence and a re-summarization prompt for re-summarization, to the artificial intelligence.

4. The method of claim 1, wherein the generating of the summarization prompt comprises:
generating an options prompt according to a summary option selection together with the email content.

5. The method of claim 4, wherein the generating of the summary prompt further comprises:
including the options prompt in the summarization prompt, and
wherein each options prompt for each summary option is pre-stored in a template storage to standardize a response template for each summary option and to extract a value to be substituted for the template from the email content.

6. The method of claim 1, wherein the forming of the email threads comprises:
removing threads containing duplicate content, threads containing empty content, and threads containing unnecessary content.

7. The method of claim 1, wherein the forming of the email threads comprises:
dividing the threads of the email content, based on a delimiter used when replying and forwarding for each email provider.

8. A computing apparatus, the apparatus comprising:
a processor configured to execute instructions; and
a memory storing the instructions, wherein execution of the instructions configures the processor to:
generate a summarization prompt for email summarization with email content according to an email summarization request;
form email threads by dividing threads of the email content; and
summarize the email content using artificial intelligence, based on the email threads grouped in units of threads and the summarization prompt.

9. The apparatus of claim 8, wherein the summarizing of email comprises:
when a predetermined number of email threads grouped in units of threads are grouped in email thread chunks, providing respective email thread chunks and the summarization prompt, to respective artificial intelligences.

10. The apparatus of claim 9, wherein the processor is further configured to:
after providing the respective email thread chunks and the summarization prompt to the respective artificial intelligences, provide an individual summary received from each artificial intelligence and a re-summarization prompt for re-summarization, to the artificial intelligence.

11. The apparatus of claim 8, wherein the generating of the summarization prompt comprises:
generating an options prompt according to a summary option selection together with the email content.

12. The apparatus of claim 11, wherein the generating of the summarization prompt further comprises:
including the options prompt in the prompt for email summarization, and
wherein each options prompt for each summary option is pre-stored in a template storage to standardize a response template for each summary option and to extract a value to be substituted for the template from the email content.

13. The apparatus of claim 8, wherein the forming of the email threads comprises:
removing threads containing duplicate content, threads containing empty content, and threads containing unnecessary content.

14. The apparatus of claim 8, wherein the forming of the email threads comprises:
dividing the threads of the email content based on a delimiter used when replying and forwarding for each email provider.

15. A non-transitory computer-readable storage medium storing instructions that, when executed by a processor, cause the processor to perform the method of one of claims 1 to 7.
